# EUROPÄISCHE PATENTSCHRIFT

(11) **EP 2 022 317 B1**
(45) Veröffentlichungstag und Bekanntmachung des Hinweises auf die Patenterteilung: **24.11.2010**
(21) Anmeldenummer: 08013309.3
(22) Anmeldetag: 24.07.2008
(51) Int. Cl.: A01D 78/10

(54) **Heuwerbungsmachschine**
Hay making machine
Machine de fenaison

(30) Priorität: 31.07.2007 DE 102007035870
(43) Veröffentlichungstag der Anmeldung: 11.02.2009
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE); Afting, Andreas, Dipl.-Ing., 48488 Emsbüren (DE); Helper, Erik, Dipl.-Ing., 48465 Quendorf (DE)

(56) Entgegenhaltungen:
- EP-A- 1 839 480
- DE-A1-102006 020 009
- DE-U1-202006 010 712

## Beschreibung

Die Erfindung betrifft eine Heuwerbungsmaschine, insbesondere zum Schwaden von landwirtschaftlichem Erntegut nach dem Oberbegriff des Anspruchs 1. Derartige Maschinen sind für sich aus dem Stand der Technik bekannt.

In der DE 20 2006 010 712 U1 ist ein Kreiselschwader mit sechs gestaffelt zueinander angeordneten Kreiselrechen näher veranschaulicht und beschrieben. Zur Aufnahme der Kreiselrechen weist der Kreiselschwader einen Maschinenrahmen auf, der aus zwei Schwenkflügelrahmen gebildet ist, die um Hochachsen verschwenkbar aus einer von einer Kupplungsvorrichtung ausgehenden, scherenartig geöffneten Arbeits- und Betriebsstellung in eine an der Kupplungsvorrichtung nahe herangeführten Transportstellung verbringbar sind. Zur Anbringung der Kreiselrechen an die Schwenkflügelrahmen sind Schwenkarme vorgesehen, die quer zur Fahrtrichtung ausgerichtet sich zwischen den Kreiselrechen und den Schwenkflügelrahmen erstrecken. Bei Kreiselschwadern dieser Bauart ist zur Verstellung der Arbeitsbreite eine ein- oder auswärts gerichtete Schwenkbewegung der Schwenkflügelrahmen notwendig, so dass damit auch eine Veränderung der Lage und Ausrichtung des unterhalb der Kreiselrechen angeordneten und der Erzielung einer optimalen Bodenanpassung der Kreiselrechen dienenden Fahrwerks verbunden ist. Zur Nachführung der Schwenkarme an die veränderten Arbeitsbedingungen sieht der Stand der Technik manuell zu bedienende Stellglieder vor, so dass von der Bedienperson des Kreiselschwaders entweder zusätzlicher Arbeitsaufwand zu leisten oder eine Verschlechterung der Bodenanpassung der Kreiselrechen in Kauf zu nehmen ist. Aufgabe der Erfindung ist es daher, eine Heuwerbungsmaschine bereitzustellen, bei der die Mängel des Standes der Technik nicht mehr auftreten.

Gelöst wird diese Aufgabe erfindungsgemäß durch die Merkmale des Anspruchs 1. In den weiteren Ansprüchen schließen sich vorteilhafte Weiterbildungen der Erfindung an.

Gemäß der Erfindung wird eine Heuwerbungsmaschine, insbesondere zum Schwaden von landwirtschaftlichem Erntegut bereitgestellt mit zumindest vier, um etwa vertikale Achsen umlaufend angetriebene Kreiselrechen, die in einer Arbeits- und Betriebsstellung in Fahrtrichtung im wesentlichen V-förmig ausgerichtet sind und sich über Stützräder aufweisende Fahrwerke gegenüber dem Erdboden abstützen, wobei ein Maschinenrahmen aus einem zentralen Zugbalken und zwei diesem Zugbalken scherenartig zugeordneten, um zumindest etwa vertikale Schwenkachsen zwischen einer Arbeits- und Betriebsstellung und einer Transportstellung überführbaren Schwenkbalken zur Aufnahme der Kreiselrechen aufgebaut ist und zur Anlenkung der Kreiselrechen an den Schwenkbalken weitere Ausleger vorgesehen sind, die zwischen einer etwa horizontalen Arbeitslage und einer annähernd vertikalen Transportlage verschwenkbar sind und den Schwenkbalken Lenker zugeordnet sind, welche einenends schwenkbar an dem zentralen Zugbalken angelenkt sind und durch die während der Schwenkbewegung der Schwenkbalken selbsttätig die Ausrichtung der Ausleger in Bezug zu den Schwenkbalken veränderbar ist. Die hier beschriebene Heuwerbungsmaschine bietet also den Vorteil, dass mit jeder vollzogenen Verschwenkung der einem zentralen Zugbalken der Heuwerbungsmaschine zugeordneten Schwenkbalken automatisch und ohne zusätzlichen Arbeitsaufwand einer Bedienperson eine Nachführung der sich zwischen den Schwenkbalken und den Kreiselrechen erstreckenden Ausleger. Es stellt sich also eine Nachführung bzw. eine Veränderung der Ausrichtung in Bezug zu den Schwenkbalken unabhängig davon ein, ob nun eine Schwenkbewegung der Schwenkbalken mit dem Ziel einer Veränderung der Arbeitsbreite oder eine Überführung der Schwenkbalken in eine Transportstellung nahe dem zentralen Zugbalken vollzogen wird. Bei der Überführung der Schwenkbalken in eine Transportstellung ergibt sich in besonders vorteilhafter Weise eine bedeutende Reduzierung des Raumes, den die Kreiselrechen in der Transportstellung einnehmen, wenn die Schwenkbalken nahezu am zentralen Zugbalken anliegen und die Ausleger mit den daran angebrachten Kreiselrechen aus einer etwa horizontalen Arbeitslage in eine annähernd vertikale Transportlage verbracht worden sind. Dies führt dazu, dass die gesamte Länge der Heuwerbungsmaschine kleiner gehalten werden kann.

In einer konstruktiv einfachen Ausführungsform ist es vorgesehen, dass zur Anbringung der Kreiselrechen an den Schwenkbalken zunächst Ausleger dienen, an deren äußeren Enden die Kreiselrechen mit dem Kreiselgetriebe angebracht sind und an deren inneren Enden sich die Schwenkbalken übergreifende, gabelförmige Halterungen anschließen. Der Ausleger ist an seinem inneren Ende schwenkbar an der gabelförmigen Halterung angelenkt, wobei die Schwenkachse annähernd in Längsausrichtung des zentralen Zugbalkens der Heuwerbungsmaschine ausgerichtet ist. An der dem zentralen Zugbalken zugewandten Seite der Schwenkbalken befinden sich zwei Lenker, die am hinteren Ende des zentralen Zugbalkens in Anlenkstellen ihren Ausgang haben und sich zumindest in etwa entlang der gesamten Länge der Schwenkbalken erstrecken. Entsprechend der Anzahl der für die Heuwerbungsmaschine vorgesehenen Gesamtanzahl an Kreiselrechen weißt jeder Schwenkbalken also zumindest zwei gabelförmige Halterungen zur Aufnahme eines Kreiselrechens auf, wobei die gabelförmigen Halterungen ihrerseits um etwa vertikale Achsen schwenkbar an den Schwenkbalken gelagert sind. An der dem zentralen Zugbalken zugewandten Seite der Schwenkbalken sind die am hinteren Ende des zentralen Zugbalken angelenkten Lenker dann ihrerseits schwenkbar mit den gabelförmigen Halterungen verbunden. Aufgrund der Tatsache, dass die den Kreiselrechen zugeordneten, der Abstützung auf dem Erdboden dienenden und Stützräder umfassenden Fahrwerke eine hinsichtlich ihrer Ausrichtung unveränderliche Zuordnung zu den Auslegern aufweisen, ist es ersichtlich, dass durch die erfindungsgemäße Veränderung der Ausrichtung (Nachführung) der Ausleger in Abhängigkeit von den Schwenkbalken auch eine Veränderung der Lage bzw. Ausrichtung der Fahrwerke erfolgt. Bei einer Veränderung der Arbeitsbreite der Heuwerbungsmaschine, d.h. durch die Einleitung einer Schwenkbewegung der Schwenkbalken wird also auch automatisch die Ausrichtung der Fahrwerke unter den Kreiselrechen an die neue Arbeitsbreite angepasst, so dass bei der Arbeit der Heuwerbungsmaschine mit unterschiedlichen Arbeitsbreiten stets eine sich an dem abzulegenden Schwad orientierende, gleiche Ausrichtung der Fahrwerke unterhalb der Kreiselrechen vorliegen. Die Bedingungen für eine optimale Bodenanpassung werden also nach jeder Arbeitsbreitenänderung automatisch wiederhergestellt.

In einer vorteilhaften Weiterbildung der Erfindung kann es vorgesehen sein, die Schwenkbalken mit einem, in der der Anlenkstelle der Schwenkbalken zugewandten Hälfte angeordneten Gelenk zu versehen, dessen Schwenkachse etwa horizontal und quer zur Längsausrichtung der Schwenkbalken ausgerichtet ist. Diese Maßnahme wirkt sich vorteilhaft auf die Anpassungsfähigkeit der Heuwerbungsmaschine auf Bodenunebenheiten bei der Schwadarbeit aus.

Ein weiterer vorteilhafter Aspekt der vorliegenden Erfindung erschließt sich aus der Anbringung eines Laufrades an die Schwenkbalken zur Abstützung während der Schwadarbeit. Durch eine Anbringung der Laufradhalterung an den Auslegern oder an den gabelförmigen Halterungen erfolgt dann bei einer Veränderung der Arbeitsbreite ebenfalls selbsttätig eine Anpassung der Laufrichtung der Laufräder, ohne dass eine Bedienerperson dort durch Steuerungs- oder Regeltätigkeiten eingreifen muss.

Weitere Vorteile und Einzelheiten der Erfindung ergeben sich aus den Unteransprüchen und einem in der Zeichnung dargestellten Ausführungsbeispiel, das im folgenden beschrieben wird.

In der Zeichnung zeigt:
- Fig.1:: eine Ansicht von oben auf eine erfindungsgemäße Heuwerbungsmaschine in einer Arbeits- und Betriebsstellung;
- Fig.2:: eine vergrößerte Ansicht der Einzelheit X in Fig.1;
- Fig.3:: eine Seitenansicht der Heuwerbungsmaschine in der Transportstellung;

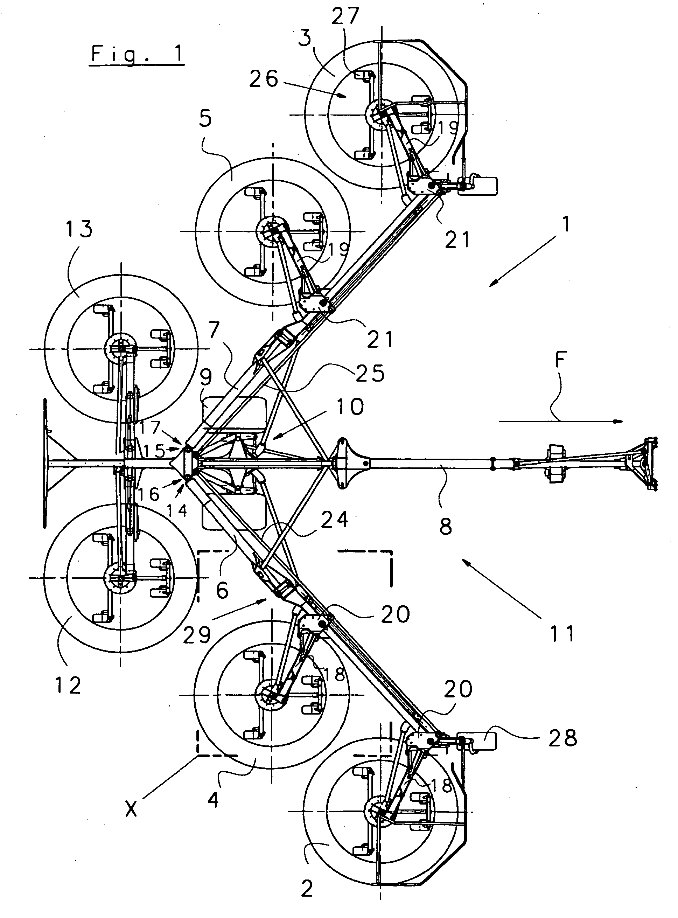

In Fig.1 ist eine Heuwerbungsmaschine 1 zum Schwaden von landwirtschaftlichem Erntegut in der Arbeits- und Betriebsstellung wiedergegeben, deren Kreiselrechen V-förmig zueinander angeordnet sind, so dass sie einen durchgehenden Streifen einer Feld- oder Wiesenfläche mit großer Breite bearbeiten können und dabei das gesammelte Erntegut zu einem Mittelschwad zusammen legen. Vier Kreiselrechen 2,3,4,5 sind dazu an Schwenkbalken 6,7 angelenkt, welche ihrerseits scherenartig dem bezüglich der Fahrtrichtung F hinteren Ende eines zentralen Zugbalkens 8 zugeordnet sind. Über eine mit Rädern 9 versehene Achse 10 stützt sich der den zentralen Zugbalken 8 und die Schwenkbalken 6,7 enthaltene Maschinenrahmen 11 gegenüber dem Erdboden ab und kann somit von einer nicht dargestellten landwirtschaftlichen Zug- und Antriebsmaschine über die Feld- oder Wiesenfläche gezogen werden. Den Kreiselrechen 2,3,4,5 nachgeordnet sind zwei weitere Kreiselrechen 12,13, die über quer zur Fahrtrichtung F sich erstreckenden und schwenkbar an einer Verlängerung des zentralen Zugbalkens 8 der Heuwerbungsmaschine 1 angebrachten Auslegern befestigt sind. Diese Verlängerung des zentralen Zugbalkens erstreckt sich über Anlenkstellen 14,15, über die die Schwenkbalken 6,7 schwenkbar mit dem zentralen Zugbalken 8 verbunden sind, in der Fahrtrichtung F entgegengesetzter Richtung hinaus und nehmen damit das von den Kreiselrechen 2,3,4,5 gesammelte Erntegut auf und formen daraus einen Mittelschwad. Die weiteren Kreiselrechen 12,13 könnten aber ebenso wie die Kreiselrechen 2,3,4,5 an den Schwenkbalken 6, 7 der Heuwerbungsmaschine 1 angelenkt sein.

Wie aus Fig.1 ersichtlich, sind die Schwenkbalken 6,7 etwa im Bereich der Achse 10 über Anlenkstellen 14,15 schwenkbar mit dem zentralen Zugbalken 8 verbunden, wobei die Anlenkstellen 14,15 Schwenkachsen 16,17 aufweisen, die zumindest etwa vertikal ausgerichtet sind und somit eine Schwenkbewegung der Schwenkbalken 6,7 aus einer weit nach außen zeigenden Arbeits- und Betriebsstellung in eine nahezu an den zentralen Zugbalken 8 angelegten Transportstellung zulassen. Die Schwenkbewegung der Schwenkbalken 6,7 vollzieht sich dabei in einer horizontalen Ebene. Weiterhin kann die Arbeitsbreite der Heuwerbungsmaschine 1 dadurch variiert werden, dass die Schwenkbalken 6,7 innerhalb dieser horizontalen Ebene verschieden große Winkelstellungen in Bezug zum zentralen Zugbalken 8 einnehmen.

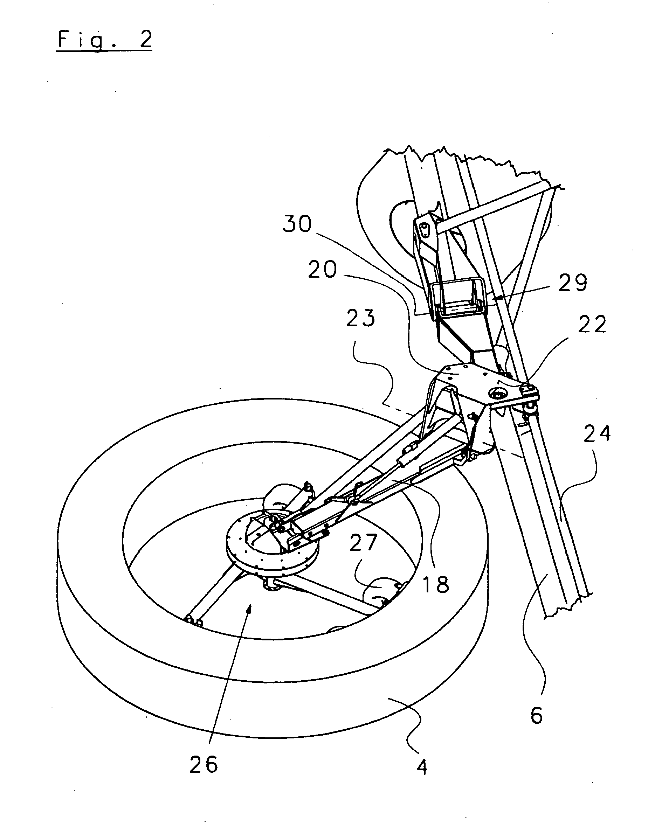

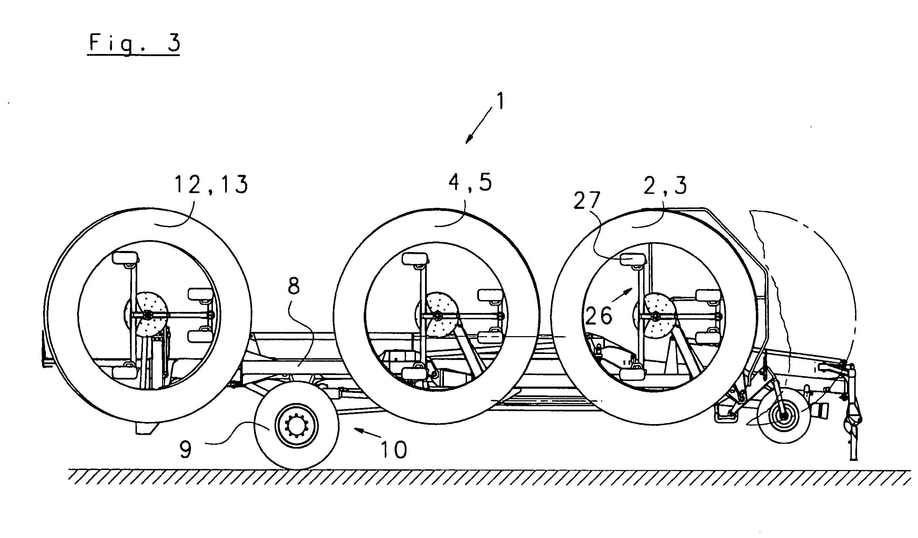

Wie weiterhin der Fig. 1 zu entnehmen ist, sind zur Aufnahme der Kreiselrechen 2,3,4,5 an den Schwenkbalken 6,7 Ausleger vorgesehen, welche sich in der Arbeits- und Betriebstellung der Kreiselrechen 2,3,4,5 in einer etwa horizontalen Arbeitslage zwischen den jeweiligen Kreiselrechen 2,3,4,5 und den Schwenkbalken 6,7 erstrecken. Einenends sind die Ausleger 18,19 mit den Kreiselgetrieben der Kreiselrechen 2,3,4,5 verbunden, während an ihren anderen Enden gabelförmige Halterungen 20,21 angeschlossen sind, welche die Schwenkbalken 6,7 übergreifen und dabei um eine etwa vertikale Achse 22 schwenkbar an den Schwenkbalken gelagert sind. (Fig.2) Die Verbindung zwischen den gabelförmigen Halterungen 20,21 und den Auslegern 18,19 ist ebenfalls schwenkbar ausgeführt, wobei jedoch die Schwenkachse 23 so ausgerichtet ist, dass diese in eine zum zentralen Zugbalken 8 parallele Richtung weist. An der dem zentralen Zugbalken 8 zugewandten Seite der Schwenkbalken 6,7 sind erfindungsgemäß Lenker 24,25 angeordnet, die von Anlenkstellen am zentralen Zugbalken 8 ausgehen und sich in etwa über die Länge der Schwenkbalken 6,7 an diesen entlang erstrecken. Diese Lenker sorgen nun dafür, dass bei Schwenkbewegungen der Schwenkbalken 6,7 selbsttätig eine Veränderung der Ausrichtung der die Kreiselrechen 2,3,4,5 tragenden Ausleger 18,19 in Bezug zum zentralen Zugbalken eingeleitet wird. Bei der Arbeit auf der Feld- oder Wiesenfläche bedeutet diese Nachführung der Ausleger 18,19, dass den Auslegern 18,19 fest zugeordnete Fahrwerke 26 mit ihren Stützrädern 27 zur Abstützung eines jeden Kreiselrechens 2,3,4,5 gegenüber dem Erdboden stets eine Ausrichtung, insbesondere gegenüber dem abzulegenden Erntegutschwad beibehalten und somit eine optimale Bodenanpassung der Kreiselrechen gewährleistet bleibt. Bei der Überführung der Kreiselrechen 2,3,4,5 in die Transportstellung, die in Fig.3 näher veranschaulicht ist, ergibt sich durch die erfindungsgemäße Nachführung der Ausleger 18,19 in Bezug zum zentralen Zugbalken 8, dass die in der Transportstellung in etwa vertikal ausgerichteten Kreiselrechen 2,3,4,5 einen erheblich geringeren Raum beanspruchen. Dies ist in Fig.3 dadurch kenntlich gemacht, dass in einer strichpunktierten Darstellung der vordere Kreiselrechen 2,3 in der Stellung angedeutet sind, in der diese sich ohne eine selbsttätige Nachführung der Ausleger 18,19 befinden würden.

In einer vorteilhaften Weiterbildung der Erfindung kann es vorgesehen sein, dass den Schwenkbalken 6,7, insbesondere an deren äußeren Enden Laufräder 28 zugeordnet sind, die der Abstützung der Schwenkbalken 6,7 gegenüber dem Erdboden dienen. Hierbei erweist es sich als überaus vorteilhaft, wenn die Laufräder 28 derart an den Schwenkbalken 6,7 gehaltert sind, dass die Laufräder 28 durch die erfindungsgemäße Nachführung der Ausleger 18,19 so ausgerichtet werden, dass ihre Laufrichtung der Ausrichtung des zentralen Zugbalkens entspricht. In einer vorteilhaften Ausführungsform sind die Laufräder an den gabelförmigen Halterungen 20,21 angebracht.

In Fig. 2 ist eine Einzelheit der Heuwerbungsmaschine 1, nämlich die Anbringung der die Kreiselrechen 2,3,4,5 tragenden Ausleger 18,19 an den Schwenkbalken 6,7 in einer vergrößerten Darstellung wiedergegeben. Daraus wird deutlich, dass die Ausleger 18,19 eine etwa horizontale Arbeitslage aufweisen und zur Verbringung in eine Transportstellung eine etwa vertikale Lage einnehmen, nachdem die Schwenkbalken 6,7 in eine Stellung nahe dem zentralen Zugbalken 8 verschwenkt worden sind. Weiterhin verdeutlicht diese Darstellung, dass die Schwenkbalken 6,7 mit einem Gelenk 29 versehen sind, dessen Schwenkachse 30 etwa horizontal und quer zur Längsausrichtung der Schwenkbalken 6,7 ausgerichtet ist. Diese Maßnahme dient der verbesserten Anpassung der Heuwerbungsmaschine 1 an Bodenunebenheiten auf der Feld- oder Wiesenfläche.

Wie bereits erwähnt, zeigt Fig.3 eine Seitenansicht der Heuwerbungsmaschine 1 in der Transportstellung. Aus dieser Darstellung geht hervor, welchen Raum die Kreiselrechen 2,3,4,5 in der Transportstellung benötigen. Daher erweist es sich als äußerst vorteilhaft, wenn durch die erfindungsgemäße Nachführung der Ausleger 18,19 die äußeren Abmessung der Heuwerbungsmaschine kompakt gehalten werden können. Insbesondere durch die Darstellung (strichpunktiert) eines Kreiselrechen in einer Stellung ohne eine Nachführung der Ausleger 18,19 wird der Nutzen der erfinderischen Ausbildung der Heuwerbungsmaschine 1 zum Ausdruck gebracht.

Obwohl in dem veranschaulichten Ausführungsbeispiel eine vorteilhafte Gestaltung der Heuwerbungsmaschine wiedergegeben wurde, so sind im Rahmen der Erfindung durchaus weitere Modifikationen denkbar. So ist es beispielweise durchaus vorstellbar, dass den Lenkern 24,25 zusätzlich zu der bereits offenbarten Gestaltung noch ein Stellglied, beispielsweise in Form einer hydraulischen Kolben-Zylinder-Anordnung zugeordnet ist, damit dadurch weitere, die Maschinenbedienung vereinfachende bzw. verbessernde Ein- oder Verstelltätigkeiten ausgeführt werden können.

## Patentansprüche

1. Heuwerbungsmaschine, insbesondere zum Schwaden von landwirtschaftlichem Erntegut mit zumindest vier, um etwa vertikale Achsen umlaufend angetriebene Kreiselrechen (2,3,4,5), die in einer Arbeits- und Betriebsstellung in Fahrtrichtung (F) im wesentlichen V-förmig ausgerichtet sind und sich über Stützräder (27) aufweisende Fahrwerke (26) gegenüber dem Erdboden abstützen, mit einem Maschinenrahmen (11), der aus einem zentralen Zugbalken (8) und zwei diesem Zugbalken (8) scherenartig zugeordneten, um zumindest etwa vertikale Schwenkachsen (16,17) zwischen einer Arbeits- und Betriebsstellung und einer Transportstellung überführbaren Schwenkbalken (6,7) zur Aufnahme der Kreiselrechen (2,3,4,5), aufgebaut ist, wobei zur Anlenkung der Kreiselrechen (2,3,4,5) an den Schwenkbalken (6,7) weitere Ausleger (18,19) vorgesehen sind, die zwischen einer etwa horizontalen Arbeitslage und einer annähernd vertikalen Transportlage verschwenkbar sind, **dadurch gekennzeichnet, dass** den Schwenkbalken (6,7) Lenker (24,25) zugeordnet sind, welche einenends schwenkbar an dem zentralen Zugbalken (8) angelenkt sind und durch die während der Schwenkbewegung der Schwenkbalken (6,7) selbsttätig die Ausrichtung der Ausleger (18,19) in Bezug zu den Schwenkbalken (6,7) veränderbar ist.

2. Heuwerbungsmaschine nach Anspruch 1, **dadurch gekennzeichnet, dass** durch eine Veränderung der Ausrichtung der Ausleger (18,19) in Bezug zu den Schwenkbalken (6,7) selbsttätig eine Verringerung des von den Kreiselrechen (2,3;4,5) in der Transportstellung benötigten Raumes erreichbar ist.

3. Heuwerbungsmaschine nach Anspruch 1 und 2, **dadurch gekennzeichnet, dass** das Ausmaß der Veränderung der Ausleger (18,19) in Bezug zu den Schwenkbalken (6,7) durch das Abstandsmaß zwischen einer Anlenkstelle (14,15) der Schwenkbalken (6,7) und einer Anlenkstelle der Lenker (24,25) am zentralen Zugbalken (8) bestimmt ist.

4. Heuwerbungsmaschine nach Anspruch 1, **dadurch gekennzeichnet, dass** durch die Veränderung der Ausrichtung der Ausleger (18,19) in Bezug zu den Schwenkbalken (6,7) eine selbsttätige Ausrichtung der Fahrwerke (26) der Kreiselrechen (2,3,4,5) in Fahrtrichtung (F) erreichbar ist.

5. Heuwerbungsmaschine nach einem der Ansprüche 1 bis 4, **dadurch gekennzeichnet, dass** die Schwenkbalken (6,7) mit einem Gelenk (29) versehen sind, welches eine etwa horizontal und quer zur Längsausrichtung der Schwenkbalken (6,7) gerichtete Schwenkachse (30) aufweist.

6. Heuwerbungsmaschine nach Anspruch 5, **dadurch gekennzeichnet, dass** das Gelenk (29) auf der der Anlenkstelle (14,15) am zentralen Zugbalken (8) zugewandten Hälfte der Schwenkbalken (6,7) angeordnet ist.

7. Heuwerbungsmaschine nach einem der Ansprüche 1 bis 6, **dadurch gekennzeichnet, dass** die Ausleger (18,19) über gabelförmige Halterungen (20,21) mit den Schwenkbalken (6,7) verbunden sind, welche um etwa vertikale Achsen (22) schwenkbar an den Schwenkbalken (6,7) angelenkt sind.

8. Heuwerbungsmaschine nach Anspruch 7, **dadurch gekennzeichnet, dass** die gabelförmigen Halterungen (20,21) die Schwenkbalken (6,7) übergreifen und an der dem zentralen Zugbalken (8) zugewandeten Seite der Schwenkbalken (6,7) schwenkbar mit den Lenkern (24,25) verbunden sind.

9. Heuwerbungsmaschine nach Anspruch 7, **dadurch gekennzeichnet, dass** die Verbindung zwischen den Auslegern (18,19) und den gabelförmigen Halterungen (20,21) schwenkbar ausgebildet ist, wobei die Schwenkachse (23) annähernd in Längsausrichtung des zentralen Zugbalkens (8) ausgerichtet ist.

10. Heuwerbungsmaschine nach Anspruch 1 mit einem den Schwenkbalken (6,7) zugeordneten Laufrad, **dadurch gekennzeichnet, dass** während der Schwenkbewegung der Schwenkbalken (6,7) selbsttätig die Ausrichtung des Laufrades (28) in Bezug zu den Schwenkbalken (6,7) veränderbar ist.

## Claims

1. Haymaking machine, particularly for windrowing harvested agricultural crops, having at least four rotary rakes (2, 3, 4, 5) which are driven in rotation about approximately vertical axes, which are aligned substantially in a V-shape in the direction of travel (F) in a working and operating position and which are supported relative to the ground by running gear units (26) having supporting wheels (27), having a frame (11) which is made up of a central drawbar (8) and of two pivoting booms (6, 7), to receive the rotary rakes (2, 3, 4, 5), which are associated with the drawbar (8) after the fashion of scissor blades and which can be transferred between a working and operating position and a position for transport about at least approximately vertical axes of pivot (16, 17), further outrigger arms (18, 19), which can be pivoted between an approximately horizontal working position and an approximately vertical position for transport, being provided to hinge the rotary rakes (2, 3, 4, 5) to the pivoting booms (6, 7), **characterised in that** the pivoting booms (6, 7) have associated with them links (24, 25) which are pivotably hinged to the central drawbar (8) at one end and by which the alignment of the outrigger arms (18, 19) relative to the pivoting booms (6, 7) can be changed automatically during the pivoting movement of the pivoting booms (6, 7).

2. Haymaking machine according to claim 1, **characterised in that** a reduction in the space required by the rotary rakes (2, 3, 4, 5) in the position for transport can be achieved automatically by changing the alignment of the outrigger arms (18, 19) relative to the pivoting booms (6, 7).

3. Haymaking machine according to claims 1 and 2, **characterised in that** the extent to which the outrigger arms (18, 19) can be changed relative to the pivoting booms (6, 7) is determined by the spacing between a hinge point (14, 15) of the pivoting booms (6, 7) on the central drawbar (8) and a hinge point thereon of the links (24, 25).

4. Haymaking machine according to claim 1, **characterised in that** automatic alignment of the running gear units (26) of the rotary rakes (2, 3, 4, 5) in the direction of travel (F) can be achieved by the change in the alignment of the outrigger arms (18, 19) relative to the pivoting booms (6, 7).

5. Haymaking machine according to one of claims 1 to 4, **characterised in that** the pivoting booms (6, 7) are provided with a joint (29) which has an axis of pivot (30) which is aligned approximately horizontally and transversely to the longitudinal direction of the pivoting booms (6, 7).

6. Haymaking machine according to claim 5, **characterised in that** the joint (29) is arranged on that half of the pivoting booms (6, 7) which is adjacent the hinge point (14, 15) on the central drawbar (8).

7. Haymaking machine according to one of claims 1 to 6, **characterised in that** the outrigger arms (18, 19) are connected to the pivoting booms (6, 7) by means of forked mountings (20, 21) which are hinged to the pivoting booms (6, 7) to be pivotable about approximately vertical axes (22).

8. Haymaking machine according to claim 7, **characterised in that** the forked mountings (20, 21) fit round the pivoting booms (6, 7) and are pivotably connected to the links (24, 25) on that side of the pivoting booms (6, 7) which is adjacent the central drawbar (8).

9. Haymaking machine according to claim 7, **characterised in that** the connection between the outrigger arms (18, 19) and the forked mountings (20, 21) is designed to be pivotable, the axis of pivot (23) being aligned approximately in the longitudinal direction of the central drawbar (8).

10. Haymaking machine according to claim 1 having a travel wheel associated with the pivoting booms (6, 7), **characterised in that** the alignment of the travel wheel (28) relative to the pivoting booms (6, 7) can be changed automatically during the pivoting movement of the pivoting booms (6, 7).

## Revendications

1. Machine de fenaison notamment pour former des andains de produits agricoles de récolte comprenant :
- au moins quatre rotors râteleurs (2, 3, 4, 5) entraînés en rotation autour d'axes sensiblement verticaux, et qui, en position de travail et de fonctionnement, sont alignés principalement suivant une forme de V dans la direction de déplacement (F) et s'appuient sur le sol par des châssis de roulement (26) comportant des roues de sustentation (27),
- un châssis de machine (11) formé d'un timon central (8) et de deux poutres pivotantes (6, 7) recevant les rotors de ratelage (2, 3, 4, 5), pour pivoter au moins suivant un axe de pivotement sensiblement vertical (16, 17) entre une position de travail et de fonctionnement et une position de transport,
et pour le déploiement des rotors râteleurs (2, 3, 4, 5), d'autres bras (18, 19) sont prévus sur les poutres pivotantes (6, 7), ces bras pouvant basculer entre une position de travail sensiblement horizontale et une position de transport sensiblement verticale,
machine **caractérisée en ce que**
des bielles (24, 25) sont associées aux poutres pivotantes (6, 7), ces bielles étant articulées par une extrémité de manière pivotante au timon central (8), et pendant le mouvement de pivotement des poutres pivotantes (6, 7), ces bielles modifient automatiquement l'alignement des bras (18, 19) par rapport aux poutres pivotantes (6, 7).

2. Machine de fenaison selon la revendication 1,
**caractérisée en ce que**
par un changement de l'alignement des bras (18, 19) par rapport aux poutres pivotantes (6, 7), on réduit automatiquement l'espace nécessaire aux rotors râteleurs (2, 3, 4, 5) en position de transport.

3. Machine de fenaison selon les revendications 1 et 2,
**caractérisée en ce que**
le degré de changement des bras (18, 19) par rapport aux poutres pivotantes (6, 7) est défini par la mesure de l'écartement entre un point d'articulation (14, 15) des poutres pivotantes (6, 7) et le point d'articulation des bielles (24, 25) sur le timon central (8).

4. Machine de fenaison selon la revendication 1,
**caractérisée en ce qu'**
en modifiant l'alignement des bras (18, 19) par rapport aux poutres pivotantes (6, 7), on aligne automatique les châssis de roulement (26) des rotors râteleurs (2, 3, 4, 5) dans la direction de déplacement (F).

5. Machine de fenaison selon les revendications 1 à 4,
**caractérisée en ce que**
les poutres pivotantes (6, 7) sont munies d'une articulation (29) dont l'axe de pivotement (30) est aligné sensiblement horizontalement et transversalement à la direction longitudinale des poutres pivotantes (6, 7).

6. Machine de fenaison selon la revendication 5,
**caractérisée en ce que**
l'articulation (29) est prévue sur la moitié des poutres pivotantes (6, 7) tournées vers leur point d'articulation (14, 15) sur le timon central (8).

7. Machine de fenaison selon les revendications 1 à 6,
**caractérisée en ce que**
les bras (18, 19) sont reliés aux poutres pivotantes (6, 7) par des supports (20, 21) en forme de fourche qui sont articulés aux poutres pivotantes (6, 7) de manière pivotante autour d'axes (22) sensiblement vertical.

8. Machine de fenaison selon la revendication 7,
**caractérisée en ce que**
les supports en forme de fourche (20, 21) chevauchent les poutres pivotantes (6, 7) et sont reliés aux bielles (24, 25) sur le côté des poutres pivotantes (6, 7) tourné vers le timon central (8).

9. Machine de fenaison selon la revendication 7,
**caractérisée en ce que**
la liaison entre les bras (18, 19) et les supports en forme de fourche (20, 21) est pivotante, l'axe de pivotement (23) étant aligné sensiblement dans la direction longitudinale du timon central (8).

10. Machine de fenaison selon la revendication 1, comportant une roue de roulement associée aux poutres pivotantes (6, 7),
**caractérisée en ce que**
la roue de roulement (28) s'aligne automatiquement de façon variable par rapport aux poutres pivotantes (6, 7) pendant le mouvement des poutres (6, 7).
